# EUROPÄISCHE PATENTSCHRIFT

(11) **EP 1 216 206 B1**
(45) Veröffentlichungstag und Bekanntmachung des Hinweises auf die Patenterteilung: **10.03.2004**
(21) Anmeldenummer: 99946096.7
(22) Anmeldetag: 02.09.1999
(51) Int. Cl.: C02F 1/48

(54) **PERMANENTMAGNETISCHES FLÜSSIGKEITSBEHANDLUNGSGERÄT**
PERMANENT MAGNETIC LIQUID TREATING DEVICE
APPAREIL DE TRAITEMENT DE LIQUIDE PAR AIMANT PERMANENT

(43) Veröffentlichungstag der Anmeldung: 26.06.2002
(73) Patentinhaber: Jans, Manfred Ernst, 55437 Ockenheim (DE)
(72) Erfinder: Jans, Manfred Ernst, 55437 Ockenheim (DE)
(74) Vertreter: Liesegang, Eva
(86) Internationale Anmeldenummer: PCT/EP1999/006454
(87) Internationale Veröffentlichungsnummer: WO 2001/017913

(56) Entgegenhaltungen:
- EP-A- 0 427 241
- DE-A- 4 222 686
- DE-A- 19 810 283
- DE-U- 29 617 935
- US-A- 5 378 362
- US-A- 5 837 143

## Beschreibung

Die Erfindung betrifft ein permanentmagnetisches Flüssigkeitsbehandlungsgerät mit einem rohrförmigen Gehäuse, in dem koaxial zur Gehäuselängsachse Ringmagnete und magnetisierbare Distanzscheiben angeordnet sind und das an seinen beiden Enden Anschlußstücke aufweist, wobei das Gerät Einrichtungen, die der durchströmenden Flüssigkeit eine Schraubenbewegung verleihen, und ein im Gehäuse koaxial zu seiner Längsachse und mit Abstand zur Innenwand angeordnetes Innenrohr aufweist, durch das die zu behandelnde Flüssigkeit strömt und dessen Enden mit den Anschlußstücken flüssigkeitsdicht verbunden sind, wobei die Ringmagnete und Distanzscheiben in dem flüssigkeitsfreien Raum zwischen dem Innenrohr und dem rohrförmigen Gehäuse in Richtung der Gehäuselängsachse hintereinanderliegend eingebaut sind.

Ein solches permanentmagnetisches Flüssigkeitsbehandlungsgerät ist bekannt aus DE 195 32 357 A1, und diese Druckschrift liegt dem Oberbegriff des Anspruchs 1 zugrunde. Derartige Geräte, wie sie auch aus anderen Patentschriften bekannt sind, werden besonders zur magnetischen Wasserbehandlung eingesetzt, um die Bildung von Kalkablagerungen an den Innenwänden von Rohrleitungen und Behältern zu vermeiden, indem erreicht wird, daß das im Wasser gelöste Calciumcarbonat sich nicht an den Wänden, sondern feinkörnig als abtrennbarer Schlamm abscheidet.

Das eingangs genannte bekannte Behandlungsgerät ist zwar für diesen Zweck grundsätzlich geeignet, jedoch ist seine Leistungsfähigkeit noch nicht voll befriedigend. Die beim bekannten Gerät zur Erzeugung einer Schraubenbewegung der durchströmenden Flüssigkeit verwendete Drehturbine kann keine über die gesamte Länge des Geräts gleichmäßige Schraubenbewegung erzeugen und die Konstruktion des bekannten Geräts führt auch zu einem unerwünscht höheren Druckabfall.

Der Erfindung liegt daher die Aufgabe zugrunde, ein Behandlungsgerät der oben genannten Art so weiterzubilden, daß sein Aufbau vereinfacht und sein Wirkungsgrad deutlich verbessert wird, d.h. daß die Kesselsteinbildung in von Leitungswasser durchströmten Rohrleitungen und Tanks, aber auch in einem Flüssigkeitskreislauf von beispielsweise Boilern oder Waschmaschinen noch weitgehender vermieden wird.

Zur Lösung dieser Aufgabe dienen die Maßnahmen des kennzeichnenden Teils des Patentanspruchs 1. Bevorzugte Ausführungsformen sind in den Unteransprüchen angegeben.

Durch das Zusammenwirken der bestimmten koaxialen Anordnung eines Stapels von zylindrischen Ringmagneten, die durch Distanzscheiben aus Metall voneinander getrennt sind und ein Innenrohr umgeben, mit einem in diesem Innenrohr angeordneten gewendelten Band aus magnetisierbarem nicht rostendem Metall, dessen Breite dem Innendurchmesser des Innenrohrs entspricht, wird die gewünschte Schraubenbewegung der durchströmenden Flüssigkeit gleichmäßig und praktisch ohne Druckabfall und unter Verzicht auf bewegte Teile sowie eine Verbesserung des auf die Moleküle des durchströmenden Wassers wirkenden Magnetflusses erreicht. Das erfindungsgemäße Gerät ist konstruktiv besonders einfach aufgebaut und kostengünstig herzustellen.

Die Erfindung wird weiter erläutert durch die folgende Beschreibung eines Ausführungsbeispiels, die sich auf die beigefügte Zeichnung bezieht. Hierin zeigen:
Fig.1 einen schematischen axialen Längsschnitt eines erfindungsgemäßen Flüssigkeitsbehandlungsgerätes, das Band in Seitenansicht gezeigt;
Fig.2 bei weggelassenem Gehäuse und Innenrohr die Anordnung der Ringmagnete der Fig.1;
Fig.3 und 4 eine Einzelheit von zwei anderen Ausführungsformen des Einlaß-Endabschnitts des Bandes des Geräts der Fig.1.

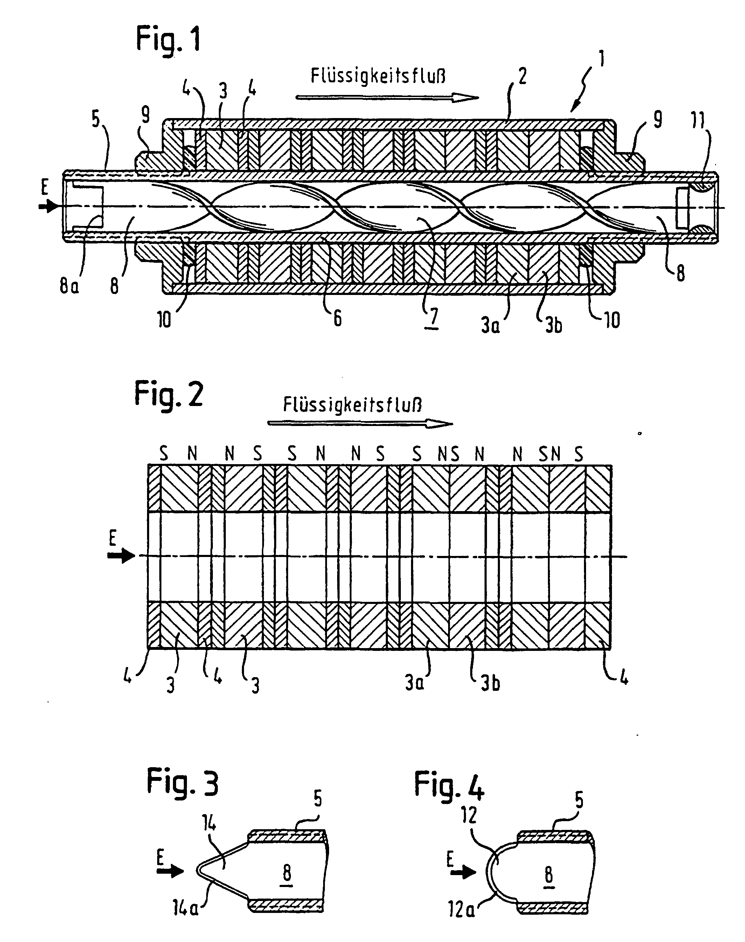

Das in Fig.1 gezeigte permanentmagnetische Flüssigkeitsbehandlungsgerät 1 weist ein rohrförmiges Gehäuse 2 auf, in dem koaxial zur Gehäuselängsachse Ringmagnete 3 und magnetisierbare Distanzscheiben 4 angeordnet sind und das an seinen beiden Enden Anschlußstücke 5 aufweist, die einstückig mit einem Innenrohr 6 sind und dieses fortsetzen. Das rohrförmige Gehäuse 2 besteht aus nicht magnetisierbarem Material, hier einer Aluminiumlegierung, dagegen das Innenrohr 6 und die rohrförmigen Anschlußstücke 5 aus magnetisierbarem nicht rostenden Metall, hier Edelstahl, und die Ringmagnete und Distanzscheiben sind als ein Stapel in dem flüssigkeitsfreien Raum zwischen dem Innenrohr und dem rohrförmigen Gehäuse hintereinanderliegend eingebaut. Der Stapel ist im Gehäuse unter Zwischenschaltung je eines elastischen Dichtungsringes (O-Ring) 10 durch auf die Anschlußstücke 5 aufgeschraubte Abschlußmuffen 9 von beiden Seiten her unverschiebbar und dicht eingeschlossen zusammengehalten. Die Abschlußmuffen 9 bestehen vorzugsweise ebenfalls aus Edelstahl.

Um der durchströmenden Flüssigkeit eine Schraubenbewegung zu verleihen, ist im Innenrohr 6 ein zu zwei Wendeln gewendeltes Band 7 aus magnetisierbarem nicht rostenden Metall angeordnet, dessen Breite dem Innendurchmesser des Innenrohrs 6 entspricht. Dieses Band ist an beiden Ende mit den rohrförmigen Anschlußstücken fest verbunden, beispielsweise an deren Innenwand durch Schweißung befestigt. Der Stapel von untereinander gleichen Ringmagneten 3 und Distanzscheiben 4 ist, wie Fig.2 zeigt, so aufgebaut, daß beginnend vom Flüssigkeitseinlauf E nach einer einfachen Distanzscheibe 4 ein Ringmagnet 3 mit einlaufseitigem Südpol, dann nach je zwei einfachen Distanzscheiben 4 drei Ringmagnete 3 mit je von einem zum anderen umgekehrter Polung und zuletzt zwei Zwillings-Ringmagnete 3a, 3b mit wiederum zu dem vorangehenden Ringmagnet und zum folgenden Zwillingsringmagnet je umgekehrter Polung, bei denen die sie bildenden Einzelringmagnete 3a, 3b einander je mit entgegengesetzten Polen berühren, angeordnet sind, so daß an der Auslaßseite des Stapels ein Südpol liegt und der Stapel durch eine dickere Distanzscheibe 4 abgeschlossen ist.

Im gezeigten Ausführungsbeispiel haben die Ringmagnete je eine axiale Abmessung von 9 mm und die Distanzscheiben 4 eine solche von 3 mm und die letzte auslaßseitig gelegene Distanzscheibe eine Dicke von 6 mm. Ebenfalls im gezeigten Ausführungsbeispiel hat das Innenrohr 6 einen Durchmesser von ½ Zoll (12,7 mm) und eine Länge von 100 mm und das gewendelte Band ist aus einem Edelstahlblech von 0,5 mm Dicke gewendelt.

Die Wendel des gewendelten Bandes liegen im Bereich des Innenrohrs 6, also zwischen den Anschlußstücken 5 und ihre Zahl kann zwischen 1 und 3 liegen, beispielsweise 2 betragen, wie in Fig.1 gezeigt. Das gewendelte Band 7 setzt sich mit je einem ungewendelten diametralen Endabschnitt 8 in die Anschlußstücke 5 fort und hat dort eine Ausnehmung 8a, um das Anschweißen, z.B. durch Punktschweißen, am Anschlußstück 5 zu erleichtern.

Falls gewünscht, kann das Band 7 einlaßseitig ohne Ausnehmung 8a ausgebildet sein und eine aus dem Anschlußstück 5 vorstehende Einlaßspitze 14 aufweisen (Fig.3). Diese Spitze ist gegen die Strömungsrichtung gerichtet und vom und an den Kanten 14a abgerundet und vorzugsweise (zumindest am Rand) mit einem glatten Kunststoffüberzug versehen. Stattdessen kann die Einlaßspitze 12 auch abgerundet mit abgerundeten Kanten 12a und vorzugsweise ebenfalls (zumindest am Rand) mit einem Kunststoffüberzug versehen sein (Fig.4). Diese glatten Einlaßspitzen verhindern das Festhaken von Flusen auf der Einlaßkante des Metallbandes 7. Gegebenenfalls kann auch das Metallband 7 über seine ganze Länge mit Kunststoff beschichtet sein.

Falls zweckmäßig kann der Strömungsquerschnitt am Flüssigkeitsauslaß durch einen am Ende des dortigen Anschlußstücks 5 gehaltenen Einsatz 11 etwas verringert werden, um die Strömungsgeschwindigkeit stromaufwärts zu verringern. Um einen einfachen Einbau des permanentmagnetischen Flüssigkeitsbehandlungsgeräts in eine Flüssigkeitsleitung zu ermöglichen, sind die Anschlußstücke 5 an ihrem Ende mit einem entsprechenden Außengewinde für einen Rohranschluß oder glatt gewellt zum Aufschieben und Befestigen eines Schlauchanschlusses ausgebildet.

## Patentansprüche

1. Permanentmagnetisches Flüssigkeitsbehandlungsgerät (1) mit einem rohrförmigen Gehäuse (2), in dem koaxial zur Gehäuselängsachse Ringmagnete (3) und magnetisierbare Distanzscheiben (4) angeordnet sind und das an seinen beiden Enden Anschlußstücke (5) aufweist, wobei das Gerät Einrichtungen, die der durchströmenden Flüssigkeit eine Schraubenbewegung verleihen, und ein im Gehäuse koaxial zu seiner Längsachse und mit Abstand zu dessen Innenwand angeordnetes Innenrohr (6) aufweist, durch das die zu behandelnde Flüssigkeit strömt und dessen Enden mit den Anschlußstücken (5) flüssigkeitsdicht verbunden sind, wobei die Ringmagnete (3) und Distanzscheiben (4) in dem flüssigkeitsfreien Raum zwischen dem Innenrohr (6) und dem rohrförmigen Gehäuse (2) in Richtung der Gehäuselängsachse hintereinanderliegend eingebaut sind, **gekennzeichnet durch** folgende Merkmale:
a) Das rohrförmige Gehäuse (2) besteht aus nicht magnetisierbarem Material;
b) Das Innenrohr (6) besteht aus magnetisierbarem nicht rostenden Metall);
c) Die rohrförmigen Anschlußstücke (5) aus magnetisierbarem nicht rostendem Metall setzen das Innenrohr (6) fort und sind einstückig mit diesem ausgebildet;
d) Im Ringraum zwischen Gehäuse (2) und Innenrohr (6) sind die untereinander gleichen Ringmagnete (3) so angeordnet, daß beginnend vom Flüssigkeitseinlauf (E) nach einer einfachen Distanzscheibe (4) ein Ringmagnet (3) mit einlaufseitigem Südpol, dann nach je zwei einfachen Distanzscheiben (4) drei Ringmagnete (3) mit je von einem zum anderen umgekehrter Polung und zuletzt zwei Zwillingsringmagnete (3a, 3b) mit wiederum zu dem vorangehenden Ringmagnet und zum folgenden Zwillingsringmagnet je umgekehrter Polung, bei denen die sie bildenden Einzelringmagnete (3a, 3b) einander je mit einander entgegengesetzten Polen berühren, aufeinanderfolgen, so daß an der Außenseite des Stapels ein Südpol liegt, und eine abschließende dickere Dichtdistanzscheibe (4) angeordnet ist;
e) Der gesamte Stapel von Ringmagneten (3) und Distanzscheiben (4) ist im Gehäuse (2) **durch** auf die Anschlußstücke (5) aufgeschraubte Muffen (9) unverschiebbar und dicht eingeschlossen gehalten;
f) Im Innenrohr (6) ist ein zu 1 bis 3 Wendeln gewendeltes Band (7) aus magnetisierbarem nicht rostendem Metall, dessen Breite dem Innendurchmesser des Innenrohrs (6) entspricht, fest gehalten;
g) Das Metallband (7) reicht mit je einem ungewendelten diametralen Endabschnitt (8) in die Anschlußstücke (5).

2. Permanentmagnetisches Flüssigkeitsbehandlungsgerät nach Anspruch 1, **dadurch gekennzeichnet, daß** das Gehäuse (2) aus Aluminium oder einer Aluminiumlegierung und das Innenrohr (6), die Anschlußstücke (5) und die auf das Außengewinde der Anschlußstücke aufgeschraubten Abschlußmuffen (9) aus Edelstahl bestehen.

3. Permanentmagnetisches Flüssigkeitsbehandlungsgerät nach einem der Ansprüche 1 oder 2, **dadurch gekennzeichnet, daß** die Ringmagnete (3) je eine axiale Abmessung von 9 mm und die Distanzscheiben (4) von je 3 mm haben und die letzte auslaßseitig gelegene Distanzscheibe eine Dicke von 6 mm hat.

4. Permanentmagnetisches Flüssigkeitsbehandlungsgerät nach einem der Ansprüche 1 bis 3, **dadurch gekennzeichnet, daß** das Innenrohr (6) einen Durchmesser von ½ Zoll (12,7 mm) und eine Länge von 100 mm hat und das aus einem Edelstahlblech von 0,5 mm Dicke gewendelte Band (7) 1 bis 2 Wendel im Innenrohr aufweist.

5. Permanentmagnetisches Flüssigkeitsbehandlungsgerät nach einem der vorangehenden Ansprüche, **dadurch gekennzeichnet, daß** zwischen der jeweils außenseitig letzten Distanzscheibe (4) und der folgenden Muffe (9) ein das Innenrohr (6) umgebender elastischer Dichtungsring (10) eingelegt ist.

6. Permanentmagnetisches Flüssigkeitsbehandlungsgerät nach einem der Ansprüche 1 bis 5, **dadurch gekennzeichnet, daß** das gewendelte Band (7) glatt ist oder auf einer oder beiden seiner Flächen Vorsprünge aufweist, welche die durchströmende Flüssigkeit in sich verwirbeln.

7. Permanentmagnetisches Flüssigkeitsbehandlungsgerät nach einem der Ansprüche 1 bis 6, **dadurch gekennzeichnet, daß** der einlaßseitige ungewendelte diametrale Endabschnitt (8) des Metallbandes (7) aus dem Anschlußstück (5) vorsteht und in einer Spitze (14) mit abgerundeten geraden Kanten (14a) oder in einer abgerundeten Spitze (12) mit abgerundeter runder Kante (12a) endet.

8. Permanentmagnetisches Flüssigkeitsbehandlungsgerät nach einem der Ansprüche 1 bis 7, **dadurch gekennzeichnet, daß** zumindest die Kanten (14a, 12a) der Spitzen (14, 12) des Bandes (7) einen Kunststoffüberzug aufweisen.

9. Permanentmagnetisches Flüssigkeitsbehandlungsgerät nach einem der Ansprüche 1 bis 8, **dadurch gekennzeichnet, daß** das Band (7) beidseitig einen Kunststoffüberzug aufweist.

10. Permanentmagnetisches Flüssigkeitsbehandlungsgerät nach einem der Ansprüche 1 bis 9, **dadurch gekennzeichnet, daß** im auslaßseitigen Anschlußstück (5) ein den Strömungsquerschnitt verringernder Einsatz (11) angebracht ist.

11. Permanentmagnetisches Flüssigkeitsbehandlungsgerät nach einem der Ansprüche 1 bis 10, **dadurch gekennzeichnet, daß** der äußere Endabschnitt der Anschlußstücke (5) außenseitig mit Gewinde oder glatt gewellt für die Verbindung mit einem Rohr- bzw. Schlauchanschluß ausgebildet ist.

## Claims

1. A permanent magnetic liquid treating device (1) comprising a tubular housing (2) in which ring magnets (3) and magnetizable spacer discs (4) are located, coaxially to the longitudinal axis of the housing, and which has connecting pieces (5) at both ends, and comprising means causing a spiral motion of the liquid passing therethrough, and an inner tube (6) which is located in the housing, coaxially to the longitudinal axis thereof and at a distance from the inner wall of the housing, the ends of said inner tube being connected liquid-tightly to said connecting pieces, the liquid to be treated flowing through said inner tube, and the ring magnets (3) and spacer discs (4) being installed in the liquid-free space between the inner tube (6) and the tubular housing (2) in such a way that they lie one behind the other in the direction of the longitudinal axis of the housing, **characterized by** the following features:
a) the tubular housing (2) consists of a non-magnetizable material;
b) the inner tube (6) consists of a magnetizable rustproof metal;
c) the tubular connecting pieces (5) consisting of a magnetizable rustproof metal extend the inner tube (6) and form a single piece therewith;
d) the ring magnets (3) which are identical to each other are arranged in the ring space between the housing (2) and the inner tube (6) so that, beginning from the liquid inlet (E), there follow, after a single spacer disc (4), a ring magnet (3) with its south pole directed towards the inlet, then, each time after two single spacer discs (4) , three ring magnets (3) with the polarity inverted from one to the next, and at last two twinned ring magnets (3a, 3b), again with polarity inverted in relation to the preceding ring magnet and to the following twinned ring magnet, the single ring magnets (3a, 3b) which constitute each twinned magnet contacting each other with opposite poles so that a south pole is at the outside of the stack, and a final thicker spacing disc (4).
e) the complete stack of ring magnets (3) and spacer discs (4) is held immovable and tightly enclosed in the housing (2) by means of sleeves (9) screwed upon the connecting pieces (5);
f) in the inner tube (6) there is fixedly held a strip (7) consisting of a magnetizable rustproof metal having a width corresponding to the inner diameter of the inner tube (6), said strip being wound to a helix with 1 to 3 turns;
g) the metal strip (7) extends with each one of its end sections (8) into the connecting pieces (5), said end sections being without helix and diametrically opposed.

2. A permanent magnetic liquid treating device according to claim 1, **characterized in that** the housing (2) consists of aluminium or an aluminium alloy and that the inner tube (6), the connecting pieces (5) and the end sleeves which are screwed upon the threading of the connecting pieces consist of stainless steel.

3. A permanent magnetic liquid treating device according to one of claims 1 or 2, **characterized in that** the axial dimension of each ring magnet (3) is 9 mm and that of the spacer discs (4) is 3 mm, and the last spacer disc (4) at the outlet side having a thickness of 6 mm.

4. A permanent magnetic liquid treating device according to any of claims 1 to 3, **characterized in that** the inner tube (6) has a diameter of 0,5 inch (12,6 mm) and a length of 100 mm and that the helically wound strip (7) being prepared from a sheet of stainless steel of 0,5 mm thickness has 1 to 2 helix windings in the inner tube.

5. A permanent magnetic liquid treating device according to any of the preceding claims, **characterized in that** an elastic sealing ring (10) surrounding the inner tube (6) is inserted between each of the outwardly last spacer discs (4) and the adjacent sleeve (9).

6. A permanent magnetic liquid treating device according to any of claims 1 to 5, **characterized in that** the helically wound strip (7) is smooth or provided with projections which serve to create turbulence within the liquid flowing therethrough.

7. A permanent magnetic liquid treating device according to any of the claims 1 to 6, **characterized in that** the helix-free diametrical terminal section (8) of the metal strip (7) at the inlet end extends outwardly from the connecting piece (5) and terminates in a tip (14) with rounded straight edges or in a rounded tip (12) with a rounded round edge (12a).

8. A permanent magnetic liquid treating device according to any of claims 1 to 7, **characterized in that** at least the edges (14a, 12a) of the tips (14, 12) of the strip (7) have a coating of plastics material.

9. A permanent magnetic liquid treating device according to any of the claims 1 to 8, **characterized in that** both sides of the strip (7) are covered with a plastic coating.

10. A permanent magnetic liquid treating device according to any of the claims 1 to 9, **characterized in that** an insert (11) which reduces the flow section is arranged in the connecting piece (5) which is situated at the outlet side.

11. A permanent magnetic liquid treating device according to any of the claims 1 to 10, **characterized in that** the terminal outer part of the connecting pieces (5) is provided with a threading or smooth ondulations for connection with a connecting pipe or tube, respectively.

## Revendications

1. Appareil de traitement de liquides à aimants permanents (1) comprenant un boîtier tubulaire (2), dans lequel des aimants annulaires (3) et des entretoises magnétisables (4) sont disposés coaxialement à l'axe longitudinal du boîtier, et qui présente à ses deux extrémités des embouts de raccord (5), l'appareil comprenant des dispositifs, qui donnent au liquide qui le traverse un mouvement hélicoïdal, ainsi qu'un tube intérieur (6) placé dans le boîtier coaxialement à son axe longitudinal et à distance de la paroi intérieure, à travers lequel le liquide à traiter s'écoule et dont les extrémités sont reliées hermétiquement aux embouts de raccord (5), les aimants annulaires (3) et les entretoises (5) étant fixés les uns derrière les autres dans le sens longitudinal entre le tube intérieur (6) et le boîtier tubulaire dans l'espace sec, et **caractérisé par** les dispositions suivantes :
a) le boîtier tubulaire (2) est réalisé en matériau non magnétisable ;
b) le tube intérieur (6) est réalisé en métal magnétisable et inoxydable ;
c) les embouts de raccord tubulaires (5) en métal magnétisable et inoxydable prolongent le tube intérieur (6) et sont formés d'un seul tenant avec ce dernier ;
d) dans l'espace annulaire entre le boîtier (2) et le tube intérieur (6), les aimants annulaires (3), identiques entre eux, sont disposés de telle sorte que, partant de l'entrée du liquide (E), se suivent une entretoise simple (4), puis un aimant à anneau (3) ayant son pôle sud du côté entrée, puis après chaque paire d'entretoises simples (4) se suivent trois aimants annulaires (3) ayant chacun une polarité inversée (ou inverse ? ?), et, finalement, deux aimants annulaires jumelés (3a, 3b), ayant également leurs pôles à chaque fois inversés par rapport à l'aimant annulaire qui les précède et à l'aimant annulaire jumelé suivant, et dans lesquels les aimants annulaires simples (3a et 3b) qui les forment se touchent à chaque fois par un pôle opposé, de telle sorte que du côté de la sortie de la pile on ait également un pôle sud et que soit placée une entretoise terminale plus épaisse (4) formant jointe ( hermétique ??) ;
e) l'ensemble de la pile d'aimants annulaires (3) et d'entretoises (4) est maintenu dans le boîtier (2) hermétiquement et fixement par des manchons (9) vissés sur les embouts de raccord (5) ;
f) un ruban spiralé (7) de 1 à 3 spirales en métal magnétisable et inoxydable dont la largeur correspond au diamètre intérieur du tube intérieur (6) est fixé dans le tube intérieur (6);
g) le ruban métallique (7) s'étend avec un segment terminal non spiralé dans chaque embout de raccord (5).

2. Appareil de traitement de liquides à aimants permanents d'après la revendication 1 **caractérisé en ce que** le boîtier (2) est en aluminium ou en alliage d'aluminium et le tube intérieur (6), les embouts de raccord (5) et les manchons terminaux (9) vissés sur le filetage mâle des embouts de raccord sont composés d'acier inoxydable.

3. Appareil de traitement de liquides à aimants permanents d'après l'une des revendications 1 ou 2, **caractérisé en ce que** les aimants annulaires (3) ont chacun une dimension axiale de 9 mm et les entretoises (4) de 3 mm chacune et la dernière entretoise située à la sortie une épaisseur de 6 mm.

4. Appareil de traitement de liquides à aimants permanents d'après l'une des revedications 1 à 3, **caractérisé en ce que** le tube intérieur (6) a un diamètre de ½ pouce (12,7 mm) et une longueur de 100 mm et que le ruban spiralé (7) avec une tôle en acier inoxydable d'une épaisseur de 5 mm dans le tube intérieur comporte 1 à 2 hélices.

5. Appareil de traitement de liquides à aimants permanents d'après l'une des revendications précédentes, **caractérisé en ce que** un joint d'étanchéité élastique (10) entourant le tube intérieur (6) est inséré entre chaque dernière entretoise (4) du côté externe et le manchon suivant (9).

6. Appareil de traitement de liquides à aimants permanents d'après l'une des revendications 1 à 5, **caractérisé en ce que** le ruban spiralé (7) est lisse ou pourvu sur l'une ou l'autre de ses deux faces des saillies, qui font tourbillonner en elles le liquide.

7. Appareil de traitement de liquides à aimants permanents d'après l'une des revendications 1 à 6, **caractérisé en ce que** le segment terminal (8) diamétral non spiralé côté entrée du ruban métallique (7) dépasse de l'embout de raccord (5) et se termine par une pointe (14) avec des arêtes droites arrondies (14a) ou par une pointe arrondie (12) avec des arêtes rondes arrondies (12a).

8. Appareil de traitement de liquides à aimants permanents d'après l'une des revendications 1 à 7, **caractérisé en ce que** au moins les arêtes (14a, 12a) des pointes (14, 12) du ruban (7) présentent un revêtement plastique.

9. Appareil de traitement de liquides à aimants permanents d'après l'une des revendications 1 à 8, **caractérisé en ce que** le ruban (7) présente des deux côtés un revêtement plastique.

10. Appareil de traitement hydraulique à aimants permanents d'après l'une des revendications 1 à 9, **caractérisé en ce qu'**un élément (11) réduisant la section de passage d'écoulement est placé dans l'embout de raccord côté sortie (5) .

11. Appareil de traitement de liquides à aimants permanents d'après l'une des revendications 1 à 10, **caractérisé en ce que** le segment terminal externe des embouts de raccord (5) côté sortie est pourvu d'un filetage mâle ou est strié et lisse en vue de le raccorder à un raccord de conduit ou de tuyau flexible.
